# EUROPÄISCHE PATENTANMELDUNG

(11) **EP 1 639 878 A2**
(43) Veröffentlichungstag der Anmeldung: **29.03.2006**
(21) Anmeldenummer: 05106064.8
(22) Anmeldetag: 05.07.2005
(51) Int. Cl.: A01D 41/127, A01D 41/14

(54) **Einrichtung zur selbsttätigen Einstellung der Schnitthöhe eines Erntevorsatzes zur Ernte stängelartiger Pflanzen**

(30) Priorität: 07.08.2004 DE 102004038404
(71) Anmelder: DEERE & COMPANY, Moline, Illinois 61265-8098 (US)
(72) Erfinder: Kormann, Georg, Dr., 66482, Zweibrücken-Mörsbach (DE)
(74) Vertreter: Holst, Sönke

(57) **Zusammenfassung**

Die Erfindung bezieht sich auf eine Einrichtung zur selbsttätigen Einstellung der Schnitthöhe eines Erntevorsatzes (20) zur Ernte stängelartiger Pflanzen an einer Erntemaschine (10), mit einer elektronischen Steuereinrichtung (38) und einem mit der Steuereinrichtung (38) verbundenen Aktor (36), der zur Einstellung der Schnitthöhe des Erntevorsatzes (20) betreibbar ist.

Es wird vorgeschlagen, dass die Steuereinrichtung (38) mit einem zur Bestimmung wenigstens einer Eigenschaft der Pflanzen eingerichteten Sensor (46) verbunden und betreibbar ist, den Aktor (36) abhängig vom Signal des Sensors (46) zu verstellen.

## Beschreibung

Die Erfindung betrifft eine Einrichtung zur selbsttätigen Einstellung der Schnitthöhe eines Erntevorsatzes zur Ernte stängelartiger Pflanzen an einer Erntemaschine, mit einer elektronischen Steuereinrichtung und einem mit der Steuereinrichtung verbundenen Aktor, der zur Einstellung der Schnitthöhe des Erntevorsatzes betreibbar ist.

Feldhäcksler werden hauptsächlich zur Ernte von Gras, Mais oder anderen Futterpflanzen genutzt. Während bei der Grasernte Pick-Ups verwendet werden, die mit Tasträdern in einer konstanten Höhe über den Boden geführt werden, ist bei der Maisernte oder Ganzpflanzensilage von Getreide die Verwendung von Maisgebissen oder Schneidwerken als Erntevorsatz für Feldhäcksler gebräuchlich. Die Schnitthöhe derartiger Erntevorsätze zum Schneiden stängelartigen Ernteguts ist variierbar.

Im Stand der Technik wird die Schnitthöhe vom Bediener des Feldhäckslers vorgegeben und durch eine Steuereinrichtung selbsttätig unter Verwendung von Sensoren und Aktoren derart nachgeregelt, dass eine vorgegebene Schnitthöhe oder ein vorgegebener Auflagedruck des Erntevorsatzes eingehalten wird. Bei der Vorgabe der Schnitthöhe sind widerstreitende Interessen zu beachten: Die eingestellte Schnitthöhe am Vorsatzgerät eines Feldhäckslers - und damit die verbleibende Stoppellänge auf dem Feld - nimmt einerseits erheblichen Einfluss auf den Flächenertrag, aber andererseits auch auf die Qualität der erzeugten Futtermasse. Dabei ist eine geringe Schnitthöhe aus der Sicht der Qualitätsoptimierung weniger wünschenswert. Niedrige Schnitthöhen können, bedingt durch an Stängeln - z. B. von Maispflanzen - anhaftende Bodenanteile wie Sandkörner, den Verschleiß von Schneidwerkzeugen an Erntevorsätzen und nachfolgenden Maschinenbauteilen, wie Häckseleinrichtungen, erheblich fördern. Dieses kann schon aus Kostengründen nicht im Sinne der Betreiber derartiger Feldhäcksler sein. Andererseits nimmt die pfluglose Bodenbearbeitung in Verbindung mit der Direkteinsaat stetig an Bedeutung zu. Diese verlangt wiederum nach einer möglichst geringen Stoppellänge und damit nach einer möglichst geringen Schnitthöhe. Der Bediener des Feldhäckslers steht somit vor dem Problem, jeweils die am Besten geeignete Schnitthöhe zu finden.

Weiterhin ist bei der Ernte von Hochenergiesilage, d. h. Mais mit hohem Kolbenanteil, das Erntegut in einer relativ hohen Höhe über dem Boden abzuschneiden. Dabei muss der Fahrer darauf achten, dass die Pflanzen möglichst knapp unterhalb der Kolben abgeschnitten werden. Ein manuelles Nachführen der Schnitthöhe führt hier in der Regel zumindest nicht über längere Zeiträume zu optimalen Ergebnissen.

In der DE 102 25 098 A wird vorgeschlagen, die bei der Ernte jeweils eingestellte Schnitthöhe messtechnisch zu erfassen und georeferenziert zu protokollieren, was den Bediener jedoch nicht bei der Wahl der geeigneten Schnitthöhe unterstützt.

Es wurde weiterhin vorgeschlagen, bei der Ernte von Getreide mit einem Mähdrescher während der Fahrt verschiedene Eigenschaften des Getreides mittels eines geeigneten Sensors zu analysieren, insbesondere den Stickstoff- oder Proteingehalt und abhängig vom Ergebnis der Analyse das Getreide in unterschiedliche Behälter einzubringen (EP 0 732 740 A, WO 03/029792 A und Corey Grant Meier, M. Sc. Thesis "Protein Mapping of Spring Wheat Using a Mobile Near-Infrared Sensor and Terrain Modeling", Montana State University, Bozeman, Montana, USA, April 2004). Eine Analyse der Inhaltsstoffe an Bord eines Feldhäckslers ist in der DE 199 22 867 A beschrieben. Dort werden die Analysewerte lediglich kartiert.

Das der Erfindung zu Grunde liegende Problem wird darin gesehen, dem Bediener eines Feldhäckslers die Einstellung der Schnitthöhe zu erleichtern.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Schnitthöhe des Erntevorsatzes selbsttätig in Abhängigkeit von einer gemessenen Eigenschaft der Pflanzen zu steuern. Die Eigenschaft wird mittels eines geeigneten, an einer beliebigen Stelle des Materialstroms angeordneten Sensors erfasst, beispielsweise eines optischen Sensors, der vorzugsweise im nahen Infrarotbereich im Reflexions- oder Transmissionsmodus arbeitet. Die vom Sensor erfasste Eigenschaft der Pflanzen kann ein Gehalt an einem Inhaltsstoff oder eine daraus abgeleitete Größe sein, wie der Gehalt an Protein, Stickstoff oder Energie oder an Verschmutzungen, z. B. Erde oder Sand.

Auf diese Weise wird es möglich, die Verschmutzung im geernteten Futter zu reduzieren und damit die Qualität zu erhöhen. Gleichzeitig wird der Bediener entlastet und unerfahrene Bediener können ein gutes Arbeitsergebnis abliefern.

In die mit dem Aktor zur Schnitthöhenvariation und dem Sensor verbundene Steuereinrichtung können unterschiedliche Strategien oder Sollvorgaben einprogrammiert sein, nach der sie den Aktor abhängig von den Signalen des Sensors ansteuert. Eine oder mehrere Sollvorgabe(n) kann oder können fest vorgegeben oder durch den Bediener auswählbar sein. Eine mögliche Sollvorgabe wäre, den Schmutzanteil im Futter minimal zu halten. Wird diese Sollvorgabe ausgewählt, wird die Schnitthöhe so weit (aber auch nicht weiter) angehoben, bis keine oder unter einem definierten (d. h fest vorgegebenen oder eingebbaren) Schwellenwert liegende Anteile an Verunreinigungen in den geernteten Pflanzen vorliegen. Eine andere mögliche Sollvorgabe wäre, einen maximalen Faseranteil im Futter zu erhalten. Die Steuereinrichtung würde dann die Schnitthöhe möglichst weit absenken. In diesem Fall könnte eine Kombination mit der Sollvorgabe hinsichtlich der Verunreinigungen erfolgen, d. h. die Schnitthöhe wird abgesenkt, bis ein definierter oder eingebbarer Grenzwert für die im Futter enthaltenen Verunreinigungen erreicht ist. Auch andere Sollvorgaben können beliebig kombiniert werden. Eine mögliche Sollvorgabe könnte auch ein maximaler Energiegehalt des Futters sein, wobei der Energiegehalt vom Bediener eingebbar oder vorgegeben sein kann. Dadurch können bestimmte Futterqualitäten selbsttätig erzielt werden.

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Einrichtung zur Einstellung der Schnitthöhe des Erntevorsatzes in Seitenansicht und in schematischer Darstellung, und
- Fig. 2: ein Schema der Einrichtung zur Einstellung der Schnitthöhe des Erntevorsatzes,

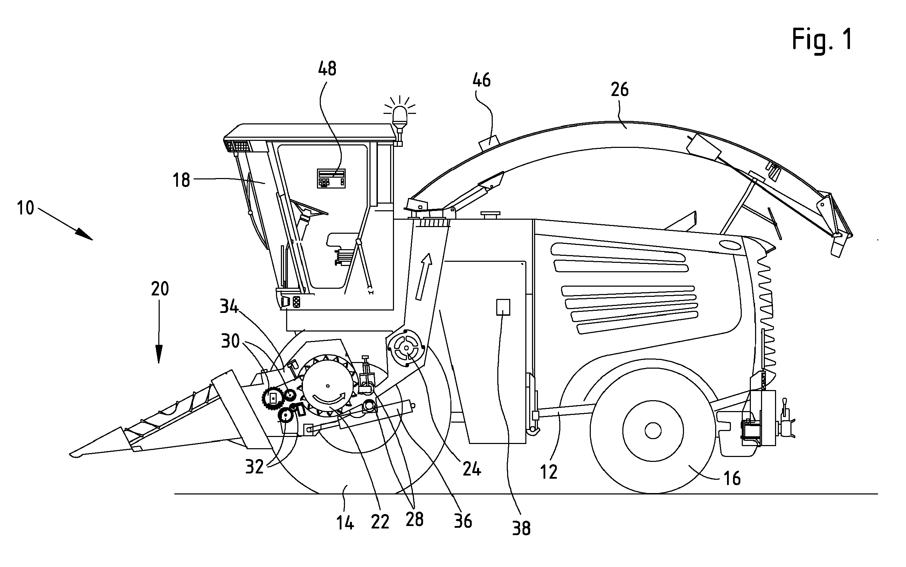

Eine in der Figur 1 gezeigte Erntemaschine 10 in der Art eines selbstfahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendendes Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über eine in ihrer Position verstellbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Die Erfindung kann auch an anderen Erntemaschinen verwendet werden, die stängelartige Erntegüter verarbeiten, zum Beispiel Maisballenpressen.

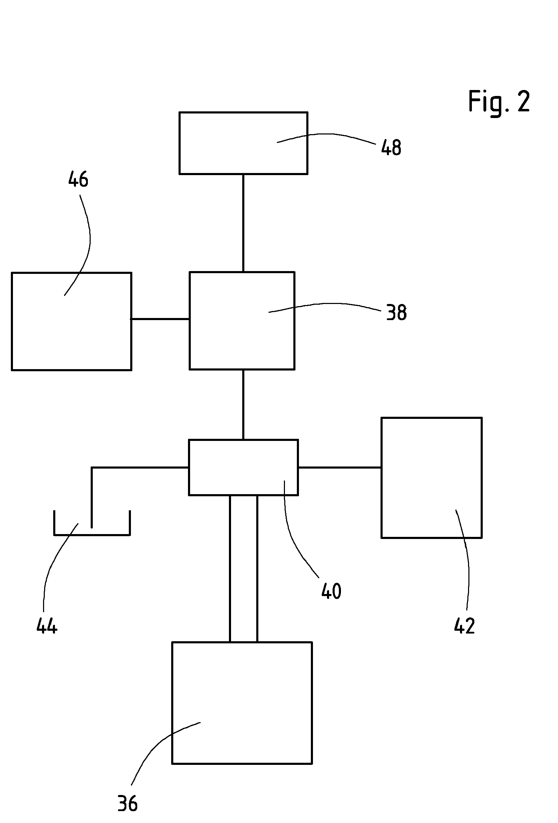

Der Erntevorsatz 20 und das ihn tragende Einzugsgehäuse 34 der Erntemaschine 10, in dem auch die Vorpresswalzen 30 und 32 angeordnet sind, sind um die Drehachse der Häckseltrommel 22 verschwenkbar gelagert. Das Verschwenken des Erntevorsatzes 20 um diese Drehachse - und damit die Einstellung der Schnitthöhe des Erntevorsatzes 20, d. h. die Höhe, in der er die Pflanzen vom im Erdboden verbleibenden Stumpf abschneidet - erfolgt durch einen Aktor 36 in Form eines Hydraulikzylinders, der einen Endes am Rahmen 12 und anderen Endes am Einzugsgehäuse 34 angelenkt ist. Der Aktor 36 ist einfach - oder doppelt wirkend und über eine Ventileinrichtung 40 (s. Figur 2) hydraulikfluidleitend mit einer Pumpe 42 bzw. einem Reservoir 44 verbindbar. An beiden Seiten des Einzugsgehäuses 34 kann ein derartiger Aktor 36 vorhanden sein. Die Ventileinrichtung 40 wird elektromagnetisch über eine Steuereinrichtung 38 kontrolliert. Die Steuereinrichtung 38 und die beschriebenen Elemente zum Verstellen des Aktors 36 sind bereits serienmäßig bei derartigen Erntemaschinen 10 vorhanden. Ein Rückkopplungssensor (nicht dargestellt) kann der Steuereinrichtung 38 ein Signal über die jeweilige Position des Aktors 36 bzw. den Schwenkwinkel des Einzugsgehäuses 34 um die Drehachse der Häckseltrommel 22 übertragen. Die Steuereinrichtung 38 ist insbesondere der Maschinencontroller, der auch andere Funktionen der Erntemaschine kontrolliert.

Die Steuereinrichtung 38 ist weiterhin mit einem Sensor 46 und einer Eingabe- und Anzeigeeinrichtung 48 verbunden. Der Sensor 46 ist an der Oberseite der Austrageinrichtung 26 angeordnet. Er arbeitet im nahen Infrarotbereich und beaufschlagt die gehäckselten Pflanzen in der Austrageinrichtung 26 mit breitbandigem Licht und teilt das von den Pflanzen reflektierte Licht über wellenlängendispersive Elemente (Gitter o. dgl.) in ein Spektrum auf, das durch geeignete lichtempfindliche Detektoren wellenlängenselektiv nachgewiesen wird. Ein geeigneter Sensor wird in der DE 199 22 867 A beschrieben, deren Inhalt durch Verweis mit in die vorliegenden Unterlagen aufgenommen wird.

Der Sensor 38 erfasst mehrere Eigenschaften der gehäckselten Pflanzen, insbesondere deren Inhaltsstoffe oder eine oder mehrere daraus abgeleitete Größen. Als Inhaltsstoffe des Erntegutes, deren Anteile im Erntegut vom Sensor 38 erfasst werden, kommen insbesondere organische Inhaltsstoffe in Betracht, wie Stärke, enzymlösliche organische Substanzen (ElosT), Öl, und Rohprotein. Außerdem kann auch der Gehalt an nichtorganischen Inhaltsstoffen, wie Mineralstoffen (Asche), z.B. Natrium und Magnesium, Verunreinigungen in Form von Sand (Siliziumdioxid) und Erde oder Wasser und die Farbe der Pflanzen gemessen werden.

Parameter des Erntegutes, die zusätzlich oder alternativ zu den Inhaltsstoffen erfasst bzw. daraus abgeleitet werden können, sind insbesondere der Gehalt an Trockensubstanz, die Faserlänge, die Verdaulichkeit, der Energiegehalt und der Rohfasergehalt des Erntegutes. Der Rohfasergehalt und die Faserlänge kann insbesondere durch eine Weiterverarbeitung von Ausgangssignalen des Sensors 46 mittels eines in der Steuereinrichtung 38 laufenden Programms ermittelt werden.

Der Steuereinrichtung 38 stehen somit anhand der Signale des Sensors 46 Informationen u. a. über den Proteingehalt, den Energiegehalt und den Anteil an Verschmutzungen in den gehäckselten Pflanzen zur Verfügung. Der Bediener in der Fahrerkabine 18 kann über die Eingabe- und Anzeigeeinrichtung 48 die aktuellen Werte dieser Größen jederzeit ablesen. Die Eingabe- und Anzeigeeinrichtung 48 ermöglicht dem Bediener weiterhin, auszuwählen, anhand welchen Sollwerts die Steuereinrichtung 38 die Schnitthöhe des Erntevorsatzes 20 einstellen soll. Außerdem kann ein Betrag für diesen Sollwert eingegeben oder unter mehreren Vorgaben ausgewählt werden. Beim Erntebetrieb steuert die Steuereinrichtung 38 den Aktor 36 basierend auf den Signalen des Sensors 46 derart an, dass die Sollvorgaben eingehalten werden. Dadurch wird selbsttätig ein bestimmter Energie- oder Proteingehalt des Futters erreicht oder ein vorgegebener Verschmutzungsgrad wird nicht überschritten. Der Bediener kann durch Eingaben in die Eingabe- und Anzeigeeinrichtung 48 die Sollwerte jederzeit ändern und, wenn sinnvoll, die Ausgaben der Steuereinrichtung 38 manuell übersteuern, z. B. um den Erntevorsatz 20 rechtzeitig von einer Kollision mit einem Hindernis anzuheben. Ein bereits serienmäßig vorhandener Sensor für die Höhe des Erntevorsatzes über dem Boden und/oder den Auflagedruck des Schneidwerks kann ebenfalls mit der Steuereinrichtung 38 verbunden sein. Sie nutzt die Signale dieses Sensors, um zu niedrige Höhen des Erntevorsatzes 20, bei denen er beispielsweise in den Boden eindringen könnte, zu verhindern.

Die Messwerte des Sensors 46 und die jeweils von der Steuereinrichtung 38 angesteuerten Schnitthöhen werden zur späteren Auswertung, z. B. für eine nachfolgende Düngung, georeferenziert abgespeichert. Die auf dem Feld verbleibende Stoppelhöhe kann auf diese Weise als Nährstoffeingabe bei einer Düngeberechnung berücksichtigt werden.

## Patentansprüche

1. Einrichtung zur selbsttätigen Einstellung der Schnitthöhe eines Erntevorsatzes (20) zur Ernte stängelartiger Pflanzen an einer Erntemaschine (10), mit einer elektronischen Steuereinrichtung (38) und einem mit der Steuereinrichtung (38) verbundenen Aktor (36), der zur Einstellung der Schnitthöhe des Erntevorsatzes (20) betreibbar ist, **dadurch gekennzeichnet, dass** die Steuereinrichtung (38) mit einem zur Bestimmung wenigstens einer Eigenschaft der Pflanzen eingerichteten Sensor (46) verbunden und betreibbar ist, den Aktor (36) abhängig vom Signal des Sensors (46) zu verstellen.

2. Einrichtung nach Anspruch 1, **dadurch gekennzeichnet, dass** der Sensor (46) ein optischer Sensor ist, insbesondere ein Nahinfrarotsensor.

3. Einrichtung nach Anspruch 1 oder 2, **dadurch gekennzeichnet, dass** die vom Sensor (46) erfasste Eigenschaft der Pflanzen der Gehalt an einem Inhaltsstoff oder eine daraus abgeleitete Größe ist, wie der Proteingehalt und/oder der Energiegehalt und/oder der Gehalt an Verschmutzungen, wie Sand oder Erde.

4. Einrichtung nach einem der Ansprüche 1 bis 3, **dadurch gekennzeichnet, dass** wenigstens eine Sollvorgabe für die Eigenschaft in die Steuereinrichtung (38) eingebbar ist, anhand der sie einen Sollwert der Schnitthöhe bestimmt.

5. Einrichtung nach Anspruch 4, **dadurch gekennzeichnet, dass** unter unterschiedlichen Sollvorgaben eine oder mehrere auswählbar ist oder sind.

6. Einrichtung nach Anspruch 4 oder 5, **dadurch gekennzeichnet, dass** die auswählbare Sollvorgabe ein Schmutzanteil oder ein Faseranteil oder ein Energiegehalt ist, deren Wert definiert oder definierbar ist.

7. Einrichtung nach einem der vorhergehenden Ansprüche, **dadurch gekennzeichnet, dass** der Sensor (46) mit den geernteten Pflanzen zusammenwirkt.

8. Einrichtung nach Anspruch 7, **dadurch gekennzeichnet, dass** der Sensor (46) stromab einer Häckseleinrichtung (22) mit den Pflanzen zusammenwirkt.

9. Erntemaschine (10), insbesondere Feldhäcksler, mit einer Einrichtung nach einem der vorhergehenden Ansprüche.
